# EUROPÄISCHE PATENTSCHRIFT

(11) **EP 1 017 648 B1**
(45) Veröffentlichungstag und Bekanntmachung des Hinweises auf die Patenterteilung: **12.02.2003**
(21) Anmeldenummer: 98948803.6
(22) Anmeldetag: 12.08.1998
(51) Int. Cl.: C04B 35/52, C04B 35/528, C04B 35/573, C04B 35/80, C04B 38/06, C04B 41/87

(54) **VERFAHREN ZUR HERSTELLUNG VON KOHLENSTOFF-VERBUNDWERKSTOFFEN UND/ODER KOHLENSTOFFHALTIGEN WERKSTOFFEN, CARBIDISCHEN UND/ODER CARBONITRIDISCHEN WERKSTOFFEN**
METHOD FOR PRODUCING CARBON COMPOSITE MATERIALS AND/OR MATERIALS CONTAINING CARBON, CARBIDIC AND/OR CARBONITRIDIC MATERIALS
PROCEDE POUR PRODUIRE DES MATERIAUX COMPOSITES A BASE DE CARBONE ET/OU DES MATERIAUX CONTENANT DU CARBONE, DES MATERIAUX A BASE DE CARBURE ET/OU DE CARBONITRURE

(30) Priorität: 28.08.1997 DE 19737631; 26.05.1998 DE 19823521
(43) Veröffentlichungstag der Anmeldung: 12.07.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: KLEBER, Siegmar, D-01705 Pesterwitz (DE)
(86) Internationale Anmeldenummer: DE9802377
(87) Internationale Veröffentlichungsnummer: WO99011581

(56) Entgegenhaltungen:
- PATENT ABSTRACTS OF JAPAN vol. 096, no. 008, 30. August 1996 & JP 08 109077 A (SANGYO GIJUTSU KENKYUSHO K.K. , ET AL.), 30. April 1996
- C.E. BYRNE ET AL.: "Carbonization of wood for advanced materials applications" CARBON, Bd. 35, Nr. 2, 1997, Seiten 259-266, XP002086598 in der Anmeldung erwähnt

## Beschreibung

Die Erfindung betrifft ein Verfahren zur Herstellung von Kohlenstoff-Verbundwerkstoffen, kohlenstoffhaltigen Werkstoffen, carbidischen Werkstoffen und/oder carbonitridischen Werkstoffen unter Verwendung von biogenen Rohstoffen. Sie ist besonders in verschiedenen Bereichen des Maschinen- und Fahrzeugbaus aber auch in vielen weiteren Bereichen vorteilhaft einzusetzen.

Es ist bekannt, daß als Rohstoffe für C-Fasern PAN-, andere Polymer-, Lignin-(Biopolymer, z.B. JP04194029 A 1992 in D01F009-17) sowie Pech- und Kohle-Precursoren verwendet werden . Darüber hinaus sind auch Regeneratcellulose-Precursoren, die durch Auflösen und Neuformierung von nativer Cellulose gewonnen werden, als Rohstoffe für C-Fasern geeignet [J.-B. Donnet, R. C. Bansal: Carbon Fibers, Marcel Dekker 1990, pp. 11].

Der Nachteil der C-Faser-Technologien besteht darin, daß zunächst eine Precursor-Faser erzeugt werden muß, die danach in eine C-Faser konvertiert wird. Diese Technologie ist durch eine Vielzahl energiereicher Verfahrensstufen, bei denen umweltschädigende Substanzen freigesetzt oder verarbeitet und nicht erneuerbare Ressourcen verbraucht werden sowie eine negative CO₂ - Bilanz gekennzeichnet.

Es ist weiterhin bekannt, daß Kohlenstoff-Verbundwerkstoffe mit eingelagerten Kohlenstoffasern (kohlenstoffverstärkter Kohlenstoff / CFC) durch die mehrfache Imprägnierung eines Geleges aus Kohlenstoffasern (C-Fasern) mit Polymeren oder Pech, deren Carbonisierung bei 500 - 1000 °C und eine nachfolgende Hochtemperaturbehandlung (HT-Behandlung) hergestellt werden [The Encyclopedia of Advanced Materials, Vol. 1, Pergamon 1994, pp. 339]. Das carbonisierte Imprägniermittel wirkt als Bindemittel für die C-Fasern und bildet eine C-Matrix, in der die C-Fasern eingelagert sind. Es ist auch möglich, diese Martrix über wiederholte CVD-Abscheidung von C aus Kohlenwasserstoffen bei ca. 1000 °C zu formieren.

Der Nachteil des Verfahrens besteht neben o. g. Nachteilen darin, daß Imprägniermittel sowie mindestens eine Verfahrensstufe für die Imprägnierung und Carbonisierung des Imprägniermittels zur Werkstoffherstellung erforderlich sind.

Es ist auch bekannt, daß aus feingemahlener, regenerierter (mechanisch und chemisch aufgeschlossener) reiner Cellulose über eine Formgebung der Cellulose und ein nachfolgendes Druckbrennen ein feinkörniger Graphitwerkstoff hergestellt werden kann [F. Jeitner, E. Nedophil, O. Vohler: Elektrographit, seine Herstellung und seine Eigenschaften, Ber. Dtsch. Keram. Ges. 41(1964)2, S. 135-142)]. Für die großtechnische Produktion von fein-kö rnigen Graphitwerkstoffen werden in großem Umfang die fossilstämmigen Rohstoffe Koks, Pech und synthetische Polymere verarbeitet. Diese Technologien sind daher ebenfalls mit o. g. Nachteilen behaftet.

Darüber hinaus gibt es neuere Versuche zur Herstellung von Werkstoffen aus Naturstoffen. So werden aus Holz Formteile herausgearbeitet und einer kontrollierten Pyrolyse unterzogen. Dabei bleibt jedoch die mehr oder minder grobe Holzstruktur erhalten, so daß die Kohlenstofformkörper nur ungenügende mechanische Eigenschaften haben [C. E. Byrne, D. C. Nagle: Carbonization of Wood for Advanced Materials Application, Carbon Vol. 35, No. 2,1997, p. 259-266]. Solche Körper eignen sich aber für eine nachfolgende Infiltration mit flüssigem Silicium und die damit einhergehende Umsetzung zu einem SiCenthaltenden Werkstoff [DE 4203773 A1; A. Kaindl, T. Lifka, P. Greil: Biomorphic SiC-Ceramics with Cellular Microstruktures, Poster Presentation at the 99th American Ceramic Society Meeting, Cinncinnati, May 4-7, 1997].

Der Nachteil dieser Verfahren besteht darin, daß die Struktur der Werkstoffe weitgehend invariabel ist, weil Struktur und Zusammensetzung des Formteiles

durch die jeweilige Wuchszone festgelegt sind sowie ungenügende und stark streuende mechanische Eigenschaften erhalten werden. Durch die stark anisotrope, strukturdeterminierte Schwindung bei der Pyrolyse wird die Teilegeometrie ungünstig beeinflußt.

Es ist weiterhin bekannt, SiC-Keramik durch Infiltration einer CFC-Vorform mit flüssigem Si herzustellen [M. Leuchs, J. Spörer: Langfaserverstärkte Keramik - eine neue Werkstoffklasse mit neuen Leistungen, Keramische Zeitschrift 49 1997, S. 18 ff.]. Neben den schon o. g. Nachteilen ist dieses Verfahren wegen dem hohen Preis von CFC kostenintensiv.

In JP 08109077 A ist ein Verfahren zur Herstellung von geformten carbonisiertem Material beschrieben, das einzelfasergebundenes Material enthält. Bei diesem Verfahren wird von Cellulose ausgegangen, aus der dann der Formkörper hergestellt wird. Dieses Verfahren stellt zwar eine Verbesserung, Verbesserung zum vorstehend genannten Stand der Technik dar, es ist aber nach wie vor relativ kostenintensiv und die Qualität und Fertigkeit der so hergestellten Formkörpern ist nicht optimal.

Faserverbundwerkstoffe auf der Basis von Kohlenstoff sind mit dem generellen Mangel behaftet, daß es die angewandten Technologien nicht ermöglichen, quasi einkomponentige C-Faser-Verbundwerkstoffe herzustellen. Voraussetzung dafür ist ein sinterfähiger Stoffzustand.

Es ist nunmehr Aufgabe der vorliegenden Erfindung ein Verfahren der genannten Art vorzuschlagen, das sämtliche Nachteile des Standes der Technik nicht aufweist.

Somit ist es Aufgabe der Erfindung ein Verfahren der genannten Art vorzuschlagen, bei dem C-Werkstoffe durch Sintern herstellbar sind und dadurch weniger Verfahrensstufen und Energie erfordern, kostengünstig und ökologischer erzeugt werden können, den Verbrauch von in der Verarbeitung bedenklichen Substanzen und umweltbelastende Verfahrenschritte minimieren und bei dem die Rohstoffe ganz oder teilweise aus erneuerbaren Ressourcen stammen. Es ist weiterhin Aufgabe der Erfindung, Verfahren anzugeben, die zu kohlenstoffhaltigen, carbidischen und /oder carbonitridischen Werkstoffen führen, deren Gefüge variabel gestaltet und somit unterschiedlichen funktionellen Beanspruchungen angepaßt werden kann unter Nutzung der Synthesevorleistungen der Natur, insbesondere der strukturellen Besonderheiten biogener Stoffe.

Erfindungsgemäß werden diese Aufgaben mit einem Verfahren gemäß einem oder mehreren der Ansprüche von 1 bis 28 gelöst.

Erfindungsgemäß ist dabei, daß die zur Herstellung verwendeten Rohstoffe ganz oder teilweise, vorzugsweise zu 100 bis 10 % biogene Stoffe sind und die biogenen Stoffe durch Carbonisieren in ein hauptsächlich kohlenstoffhaltiges Produkt konvertiert werden, gleichzeitig oder danach zu Formkörpern verarbeitet werden und gleichzeitig oder danach zu porösen oder dichten Formkörpern gesintert werden.

Die biogenen Rohstoffe können dabei faserhaltige Pflanzenteile von Faserpflanzen bzw. die Fasern von solchen Faserpflanzen wie Flachs, Hanf, Sisal, Miscanthus, Bambus, Laub- oder Nadelholz, Baumwolle, Jute, Kenaf, Ramie, Kokos u. a. m. und/oder Pflanzenfasern mit Resten von verholzten Bestandteilen oder sogar ganze Stengel bzw. Ganzpflanzen und/oder niedermolekulare pflanzliche Produkte wie Stärke, Reishülsen, Getreidekleie, Zucker oder Lignin und/oder tierische Fasern wie Haare, Wolle oder sonstige vorzugsweise faserhaltigen Bestandteile und/oder solche Rohstoffe sein, die vor ihrer Weiterverarbeitung regeneriert werden (z. B. Regeneratcellulose).

Die biogenen Rohstoffe können in Form von Vliesen, Matten, Gewebe, lose oder kompaktiert, in verschiedenen Aufbereitungszuständen und/oder geschäumt vorliegen.

Ein wesentliches Merkmal des erfindungsgemäßen Verfahrens ist, daß die biogenen Rohstoffe oder daraus nach bekannten Verfahren der Kalt- und Warmformgebung hergestellte Körper unvollständig carbonisiert werden und diese durch Sintern in einen festen anorganischen Formkörper, der hauptsächlich aus Kohlenstoff besteht, überführt werden. Vorteilhaft kann

hierbei sein, wenn die biogenen Rohstoffe vor oder nach der teilweisen Carbonisierung (Konvertierung) erst zerkleinert werden.

Vorzugsweise erfolgt die unvollständige Carbonisierung unter Schutzgasatmosphäre und in einem Bereich niedriger, aber rohstoffabhängiger Temperaturen, wobei für Pflanzenfasern die maximale Carbonisierungstemperatur 0- 100 K (z. B. 0 - 40 K) unter oder 0- 100 K (z. B. 0 - 40 K) über der Temperatur der maximalen Masseverlustrate, die in thermogravimetrischen Untersuchungen zu ermitteln ist und sich meist im Bereich 320 - 350 °C bewegt, liegt. Ein zur Sinterung geeignetes Carbonisat ist günstigerweise aus 65 - 75 % Kohlenstoff und 28 - 18 % Sauerstoff zusammengesetzt. Bei teilcarbonisierten Flachsfasern der Sorte Wiking tritt eine bei Temperatursteigerung stark erweichende Phase, die um 70 % C und 20 % O enthält, auf und die bis zu einer Temperatur nahe 600 °C eine den Massenverlust
überkompensierende Verdichtung durch einen Flüssigphasen-Sintermechanismus bewirkt.

Ebenfalls ist es günstig, wenn die aus der unvollständigen Carbonisierung stammenden Produkte wie Fasern, Pulver oder geschäumte Körper so zur weiteren Formgebung verwendet oder vorher Langfasern zu Kurzfasern oder feinen Pulvern mit isotropen Teilchen zerkleinert und gegebenenfalls granuliert werden.

Die unvollständige Carbonisierung kann unter Schutzgas wie Argon oder Stickstoff, unter kohlenstoffhaltiger Atmosphäre wie Kohlenmonoxid, Kohlendioxid, Methan, Propan, usw. bei Atmosphären- oder erhöhtem Druck erfolgen, und/oder die Ausgangsstoffe oder Formkörper werden in pulverisierten oder granulierten Kohlenstoffspezies (Koks, Ruß, biogenstämmiger Kohlenstoff) bzw. in kohlenstoffreisetzenden Mitteln eingebettet, oder die Carbonisierung kann unter Vakuum, evt. bei partieller Anwesenheit kohlenstoffhaltiger Gase oder von Kohlenstoffspezies, erfolgen.

Ebenfalls vorteilhafterweise kann die unvollständige Carbonisierung auch zusätzlich unter mechanischem Druck von 0,1 - 200 MPa, vorzugsweise 0,1 - 50 MPa, erfolgen.

Zwecks Erhöhung der Ausbeute an Kohlenstoff und zur Strukturverbesserung können günstigerweise nichtmetallische Antioxidantien wie Borverbindungen (z.B. Borax) oder metallische Antioxidantien wie unedle metallische Feinstpulver als Einbettungsmittel angewendet werden.

Es hat sich ebenfalls als vorteilhaft erwiesen, wenn nach der unvollständigen Carbonisierung bzw. nach der Formgebung der Carbonisierungsprodukte eine oxydierende Behandlung von 0 - 72 h bei 160 °C - 250 °C mit einem Sauerstoffpartialdruck von 0 - 2 MPa angeschlossen wird. Je nach Carbonisierungsbedingungen und Rohstoff kann es ausreichend sein, eine Auslagerung an Luft vorzunehmen. Mit einer oxydierenden Behandlung läßt sich der Anteil der viskosen Phase und dadurch die Sinterung beeinflussen.

Im Hinblick auf die Schrumpfung beim Sintern und die Defektverteilung im Werkstoff sowie seine Beanspruchung ist es vorteilhaft, wenn die biogenen Fasern mittels geeigneter technischer Mittel auf eine dem späteren Anwendungszweck angepaßten Länge oder Längenverteilung gebracht werden oder dieser Schritt nach dem Teilcarbonisieren erfolgt.

Zur Herstellung sinterfähiger Nano- und Feinstpulver auf der Basis von Kohlenstoff ist es vorteilhaft, wenn fasrige, anisotrope biogene Rohstoffe bzw. ihre teilcarbonisierten Folgeprodukte bis zu den entsprechenden Abmessungen, welche mit niederen Strukturebenen identisch sind, zerkleinert werden und/oder niedermolekulare, mehr isotrope biogene Rohstoffe wie Stärke, Zucker, Getreidekörner bzw. ihre teilcarbonisierten Folgeprodukte bis zu den entsprechenden Abmessungen zerkleinert werden.

Zur Herstellung gesinterter Kohlenstofformkörper ist es aus Gründen der Stabilität der Grünkörper günstig, die pulvrigen oder fasrigen Produkte nach der unvollständigen Carbonisierung und eventueller Zerkleinerung und Granulierung mittels bekannter Verfahren der Kalt- und Warmformgebung und mittels der bekannten Formgebungshilfsmittel zu vorverdichteten Formkörpern zu verarbeiten, wobei im allgemeinen die um das Hilfsmittel korrigierte Dichte 0,5 g/cm³ -1,4 g/cm³, vorzugsweise 0,8 g/cm³ bis 1,2 g/cm³, betragen soll und die vorverdichteten Formkörper nach teilweiser oder vollständiger Entfernung der Hilfsmittel gesintert werden, wobei die Wärmebehandlungsendtemperatur je nach angestrebten Sinter- und Kristallinitätsgrad zwischen 300 °C und 2800 °C beträgt. Je nach Anwendungsfall kann es vorteilhaft sein, wenn die angewandten Hilfsmittel ebenfalls biogene Rohstoffe oder biogene oder synthetische Rohstoffe mit der Fähigkeit zur Ausbildung geordneter bzw. teilgeordneter Kohlenstoffstrukturen wie beispielsweise Lignin sind.

Es ist günstig, wenn die Sinterung und Wärmebehandlung unter kohlenstoffhaltiger Atmosphäre wie Kohlenmonoxid, Kohlendioxid, Methan, Propan usw. bei Atmosphären- oder erhöhtem Druck erfolgt oder die vorverdichteten Formkörper in pulverisierten oder granulierten Kohlenstoffspezies (Koks, Ruß, biogenstämmiger Kohlenstoff) bzw. in kohlenstoffreisetzenden Mitteln eingebettet werden. Im Sinne der hiermit vorgeschlagenen Lösung ist unter "Sintern" eine Wärmebehandlung bis in den Bereich von 1000°C und unter Wärmebehandeln eine solche über den Bereich von 1000°C hinausgehende zu verstehen.

Das Sintern kann mittels bekannter Verfahren wie Schutzgassintern unter Normal- oder erhöhtem Druck (Gasdrucksintern), Vakuumsintern, Heißpressen oder nach Vorsintern bis zur Ausbildung einer geschlossenen Porosität durch heißisostatisches Pressen erfolgen. Vorteilhaft hierbei ist es, wenn das Heißpressen als Verfahren zur Vorsinterung im Bereich von 300 °C bis 500 °C angewandt wird, um einen sinterfähigen Zustand und eine Dichte zwischen 0,5 g/cm³ - 1,4 g/cm³, vorzugsweise 0,8 g/cm³ bis 1,2 g/cm³, zu erreichen, und danach eine Sinterung wie vorstehend angeschlossen wird.

Möglichkeiten zur Anwendung plastischer Formgebungsverfahren ergeben sich, wenn beim Warmformgeben uncarbonisierte biogene Rohstoffe eingesetzt werden, wodurch sich Teilcarbonisierung und Formgebung in einem Verfahrensschritt zusammenfassen lassen.

Es ist weiterhin vorteilhaft, wenn teilcarbonisierte Fasern ohne jegliche Zusätze mittels Heißpressen zumindestens vorgesintert werden, da hierdurch unmittelbare und ungestörte Sinterkontakte zwischen den Fasern entstehen und so die Herstellung von Kohlenstoffaser-Verbundwerkstoffen ohne Matrix ermöglichen.

Zur Herstellung von Kohlenstoffbasis-Verbundwerkstoffen ist es günstig, die gesinterten oder darüber hinaus teilgrafitierten oder grafitierten (wärmebehandelten) Körper mit Metallen wie Kupfer, Antimon, Magnesium, Silicium und anderen bekannten Tränkmetallen oder mit Polymeren, z.B. Phenol-, Epoxid oder Silikonharz zu infiltrieren oder die Dichte des gesinterten Körpers durch wiederholtes Verkoken von infiltriertem Pech, Polymer, Lignin u. ä. bei Temperaturen von 300 °C bis 1000 °C zu erhöhen.

In einigen Anwendungsfällen kann es vorteilhaft sein, anstelle der Infiltration vorstehende Stoffe den pulvrigem oder fasrigen teilcarbonisierten Produkten zuzumischen und erst danach zu kompaktieren und zu sintern.

Für die Erzeugung faserförmiger Produkte in einem carbothermischen Prozeß sollten den biogenen Fasern oder ihren Pyrolysaten carbidbildende und/oder nitridbildende Elemente wie Wolfram, Titan oder andere zugemischt werden.

Zur Herstellung von Siliciumcarbidbasis-Verbundwerkstoffen ist es von Vorteil, wenn der gesinterte oder darüber hinaus teilgrafitierte oder grafitierte (wärmebehandelte) Körper mit flüssigem Silicium bei Temperaturen bis maximal 1800 °C zur Voll- oder Teilumwandlung in Siliciumcarbid infiltriert wird mit dem Ziel der Herstellung von Siliciumcarbidbasis-Verbundwerkstoffen mit 0 - 100 % C, 50-100 % SiC und 0 - 50 % Si. Dabei sollten die vorverdichteten oder bereits wärmebehandelten Formkörper vor der Infiltration mit flüssigem Silicium mit siliciumorganischen Verbindung getränkt werden und sich im Falle von Siliconharzen eine Aushärtung und thermische Zersetzung anschließen, die aber Bestandteil des Gesamtprozesses sein können. Besonders vorteilhaft ist die Einbringung über die Gasphase mittels CVD-Verfahren. Es kann außerdem günstig sein, wenn den pulvrigen oder fasrigen teilcarbonisierten Produkten siliciumorganische Verbindungen zugemischt werden oder damit bzw. mit Kohlenstoff über die Gasphase beschichtet werden.

Die siliciumorganischen Verbindungen können Polysiloxane, Polysilazane und/oder Polycarbosilan, vorzugsweise Polymethylsiloxan, sein.

Für bestimmte funktionelle Anwendungen des erfindungsgemäßen Verfahrens (z. B. Kollektoren) ist es weiterhin vorteilhaft, die feinen schlauchartigen Porenkanäle, die aus dem pflanzlichen Lumen resultieren, zwecks Speicherung, Zwischenspeicherung und Transport mit Gasen und/oder Flüssigkeiten zu füllen.

Mit der vorliegenden Erfindung werden die Nachteile des Standes der Technik beseitigt und es ist insbesondere von Vorteil, daß die Strukturhierarchie der biogenen Rohstoffe in den Werkstoff transformiert wird. Besondere Vorteile der Erfindung sind:
- Große Variabilität bei der Gestaltung der Gefüge und Eigenschaftsprofile der Werkstoffe einschließlich der Möglichkeit ihrer Anpassung an unterschiedliche Beanspruchungen
- Herstellbarkeit einkomponentiger fasriger oder isotroper C-Werkstoffe
- Anwendung von Sinterverfahren und Verfahren der plastischen Formgebung
- Einsparung von Verfahrensstufen und Energie sowie verringerter Aufwand bei der mechanischen Bearbeitung als Voraussetzung für die kostengünstige Herstellung der Werkstoffe und Bauteile
- Breite Anwendbarkeit auf dem Sektor der C- und SiC-Werkstoffe
- Einsatz von Rohstoffen aus erneuerbaren Ressourcen
- Bessere ökologische Gesamtbilanz infolge Verbrauchsreduzierung synthetischer und fossilstämmiger Bindemittel sowie CO₂-Neutralität

Speziell für Kohlenstoffwerkstoffe unter Bewertung der besonderen Vorteile, die sich aus der erfindungsgemäßen Lösung ergeben, resultiert die besondere Anwendung der Erfindung für Bauteile für Motoren (Verbrennungsmotor, Stirling-Motor, Kolben, Zylinder, Leichtbau, hervorragende tribologische Eigenschaften, intelligente Mangelschmierung), Bremsen (Friktionswerkstoffe), Gleitlager, Gleitringdichtungen, Heizer, Adsorptionswärmetauscher und Kollektoren (Speicher für Flüssigkeiten und Gase), Humanimplantate (Biokompatibilität und Bioaktivität), Filter (Grob- bis Feinstporosität), elektromagnetische Abschirmungen, Zerspanungswerkzeuge u. a. m. (neue quasi einkomponentige Kohlenstoffaser-Verbundwerkstoffe). Speziell für SiC-Werkstoffe resultiert die besondere Anwendung der Erfindung für faserstrukturierte SiC-C-Verbunde für Bremsen, Lager und Teile mit komplizierter Gestalt (neue kurzfaserverstärkte SiC-Werkstoffe).

Die Erfindung wird an nachfolgenden Ausführungsbeispielen näher erläutert.

### Ausführungsbeispiel 1

Eine Matte aus 50 % Flachs- und 50 % Sisalfasern mit dem Flächengewicht von 950 g/m² , bezogen von der Fa. EMPE Geretsried, wurde in einem Schutzgasofen mit Abscheider eingesetzt und bis zu einer Temperatur von 330 °C unter strömenden Stickstoff aufgeheizt. Von 260 °C bis 330 °C betrug die Heizrate 3,7 K/h. Als Ausbeute ergab sich ein Rückstand von 42 %. Das Carbonisat bestand zu 73 % aus C und zu 20 % aus O bei einem N-Gehalt von ca. 1 %.

Das auf eine Faserlänge von ca. 1 mm zerkleinerte Gut wurde ohne Hinzufügen von Zusätzen in eine Kohlenstoffmatrize mit 60 mm Durchmesser eingefüllt und einem Heißpreßprozeß unter Vakuum unterzogen. Das Aufheizen auf 450 °C erfolgte mit 20 K/min und unter einem Druck von 28 MPa, das anschließende Halten für 60 min bei einem Druck von 35 MPa. Nach der Ofenabkühlung hatte die Probe eine Dichte von 1,19 g/cm³. Durch das Heißpressen wird C auf 76 % angereichert und O auf 17 % abgereichert.

Das Sintern erfolgte unter Ar, wobei die Heizrate bis 1000 °C 12 K/h und die Haltedauer 30 min betrug. Beim Sintern schrumpft die Probe um ca. 40 % bezogen auf das Volumen und verdichtet sich dabei auf 1,44 g/cm³. Während des Sinterns erhöht sich der C-Gehalt auf 89 % und der O-Gehalt sinkt auf 6 %. Die an Biegestäben mit einem Querschnitt von 4 × 3 mm² bestimmten mechanischen Eigenschaften enthält nachfolgende Tabelle 1 im Vergleich mit herkömmlichen, analogen Werkstoffen.

**Tabelle 1:**

| **Mechanische Eigenschaften eines gesinterten, kurzfaserstrukturierten Biokohlenstoff - Werkstoffes im Vergleich mit herkömmlichen, analogen Werkstoffen** | | | | |
|---|---|---|---|---|
| **Rohstoff** | **Rohdichte** | **Biegebruchfestigkeit** | **Elastizitätsmodul** | **Bruchdehnung** |
| | **g/cm**^{**3**} | **Mpa** | **GPa** | **%** |
| C-bio | 1,44 | 66±6 | 18±1 | 0,37±0,04 |
| | | | | |
| C-PAN[1], (ohne Nachverdichtung) | 1,02 | 25 | 18 | 0,14 |
| | | | | |
| C-PAN [1], (1. Nachverdichtung) | 1,28 | 95 | 46 | 0,20 |
| | | | | |
| C-PAN [1], (3. Nachverdichtung) | 1,40 | 220 | 60 | 0,37 |
| | | | | |
| Koks [2] | 1,55 | 15 | 9,5 | 0,15 |
| | | | | |
| Koks [2] | 1,64 | 50 | 16 | 0,31 |

| | | | | |
|---|---|---|---|---|
| [1] Prospekt SGL Carbon Group: Sigrabond - Carbonfaserverstärkter Kohlenstoff | | | | |
| [2] Prospekt SGL Carbon Group: Feinstkorngraphite für industrielle Anwendungen, Kohlenstoff (Hartbrand), Sorte R7141 (Rohdichte 1,55 gcm⁻³) bzw. R4340H(Rohdichte 1,64 gcm⁻³) | | | | |

Aus dem Vergleich ist ersichtlich, daß der gesinterte, kurzfaserstrukturierte Biokohlenstoff-Werkstoff, hergestellt nach der erfindungsgemäßen Lösung, bessere Eigenschaften hat als vergleichbarer kohlenstoffaserverstärkter Kohlenstoff mit Langfasern (C-PAN, ohne Nachverdichtung) bzw. die körnigen Kohlenstoff-Werkstoffe auf der Basis von Koks und Pech.

### Ausführungsbeispiel 2

An den nach Ausführungsbeispiel 1 hergestellten Proben wurden die tribologischen Eigenschaften mittels Stift-Scheibe-Versuch im Trockenlauf geprüft. Dabei wird ein Stift mit einem angeschliffenen 90°-Kegel aus dem zu untersuchenden Werkstoff mit seiner Spitze gegen eine Scheibe aus dem Gegenwerkstoff gepreßt. Die angewandte Normalkraft betrug 5 N und die Umfangsgeschwindigkeit 1 m/s. Neben dem Reibungskoeffizienten wird als Maß für den Verschleißwiderstand der Durchmesser der Reibmarke ermittelt. In der nachfolgenden Tabelle 2 sind gesinterte, kurzfaserstrukturierte Biokohlenstoff-Werkstoffe den Strukturkeramiken Si₃N₄-TiN und SiC-TiC gegenübergestellt.

**Tabelle 2:**

| **Tribologische Eigenschaften** | | | |
|---|---|---|---|
| **Stift** | **Reibungskoeffizient** | **Durchmesser der Reibmarke** | **Scheibe** |
| | µ | mm | |
| C-bio 1000 | 0,16 | 0,28 | Si₃N₄-TiN |
| C-bio 800 | 0,20 | 0,31 | Si₃N₄-TiN |
| Si₃N₄-TiN | 0,22 | 0,21 | Si₃N₄-TiN |
| SiC-TiC | 0,40 | 0,24 | SiC-TiC |

C-bio 1000 bezeichnet den bei 1000 °C und C-bio 800 einen nur bis 800 °C gesinterten, erfindungsgemäßen Werkstoff. Es ist ersichtlich, daß die Kohlenstoff-Verbundwerkstoffe mit Kurzfasern ähnlich günstige tribologische Eigenschaften wie die kostenintensiven und speziell hergestellten Strukturkeramiken haben.

### Ausführungsbeispiel 3

Das Carbonisat aus Ausführungsbeispiel 1 wurde ebenfalls ohne Hinzufügen von Zusätzen heißgepreßt. Dazu wurde es in eine Kohlenstoffmatrize mit einem Durchmesser von 30 mm eingefüllt und auf 450 °C mit einer Rate von 20 K/min und unter einem Druck von 14 MPa erhitzt, anschließend unter diesem Druck 60 min gehalten und abgekühlt. Die Atmosphäre war Stickstoff. Der heißgepreßte Formkörper hatte eine Dichte von 0,94 g/cm³.

Das Sintern wurde unter gleichen Bedingungen wie im Ausführungsbeispiel 1 ausgeführt und ergab eine Dichte von 1,02 g/cm³. Durch Tränken der Probe in einer 50 %-igen Lösung von Polymethylsiloxan in Hexan und dem Aushärten bei 250 °C in Luft, 1 h, ergab sich ein Massezuwachs von 6 %. Das Infiltrieren mit Silicium erfolgte nach dem Dochtverfahren unter Vakuum, wobei die maximale Temperatur 1600 °C betrug.

Die an Biegestäben mit einem Querschnitt von 4 × 3 mm² bestimmten mechanischen Eigenschaften enthält nachfolgende Tabelle 3 im Vergleich mit herkömmlichen, analogen Werkstoffen.

**Tabelle 3:**

| **Mechanische Eigenschaften eines kurzfaserstrukturierten SiC - C - Si - Verbundwerkstoffes im Vergleich mit herkömmlichen, analogen Werkstoffen** | | | | |
|---|---|---|---|---|
| **Rohstoff** | **Rohdichte** | **Biegebruchfestigkeit** | **Elastizitätsmodul** | **Bruchdehnung** |
| | **g/cm**^{**3**} | **MPa** | **GPa** | **%** |
| C-bio | 2,82 | 328±14 | 119±1 | 0,28±0,01 |
| | | | | |
| C-PAN [3] | 1,9 | 200 | 75 | 0,2 |
| | | | | |
| SiO₂/Koks [4] | 3,1 | 350 | 360 | 0.1 |

| | | | | |
|---|---|---|---|---|
| [3] M. Leuchs, J. Spörer: Langfaserverstärkte Keramik - eine neue Werkstoffklasse mit neuen Leistungen, Keramische Zeitschrift 48 [1] 1997, S. 18 - 22 | | | | |
| [4] E. Gugel: "Nichtoxidkeramik" im Handbuch der Keramik, 1986, S. 3 ff | | | | |

Es ist ersichtlich, daß die Anwendung des erfindungsgemäßen Verfahrens einen technisch bedeutenden Zuwachs im Zähigkeitsmaß Biegebruchdehnung im Vergleich mit der herkömmlichen Technologie [4] ergibt. Gegenüber einem Verfahren, bei dem von einem CFC-Formteil, das vergleichsweise kostenintensiv ist, ausgegangen wird vgl. [3], ergibt sich ein höheres mechanisches Eigenschaftsniveau.

### Ausführungsbeispiel 4

Aus einer Flachs-Sisal-Matte herausgeschnittene Scheiben wurden in eine Kohlenstoffmatrize mit 30 mm Durchmesser ohne Hinzufügen von Zusätzen eingebracht und einem Heißpreßprozeß unter Vakuum unterzogen. Mit einer stufenweisen Erhöhung der Temperatur unter einem konstanten Druck von 22 MPa erfolgte die schrittweise Carbonisierung der Rohfasern. Bei Erreichen einer Temperatur von 431 °C konnten infolge der einsetzenden Plastifizierung die in der Matrize befindlichen, nunmehr teilcarbonisierten Fasern in die zentrische Bohrung des Oberstempels gedrückt werden. Hierdurch war es möglich, aus dem Rohzustand heraus mittels Fließpressen einen Stab ø30×50 mm² zu erzeugen.

Das Fließpressen gelingt auch, wenn z. B. der höhere Druck von 35 MPa angewandt wird. Dann setzte der Vorgang des Fließpressens aber bereits bei einer Temperatur von 350 °C ein.

## Patentansprüche

1. Verfahren zur Herstellung von Kohlenstoff-Verbundwerkstoffen, kohlenstoffhaltigen Werkstoffen, carbidischen und/oder carbonitridischen Werkstoffen, **dadurch gekennzeichnet, daß** die zur Herstellung eingesetzten Rohstoffe ganz oder teilweise, das heißt zu 100 -10 % biogene, das heißt aus natürlichen faserhaltigen oder tierischen Stoffen bestehende Stoffe sind, die durch unvollständiges Carbonisieren in ein hauptsächlich kohlenstoffhaltiges Produkt konvertiert werden, vorher, gleichzeitig oder danach zu Formkör-pern verarbeitet werden und gleichzeitig oder danach zu porösen oder dichten Formkörpern gesintert werden.

2. Verfahren nach Anspruch 1, **dadurch gekennzeichnet, daß** die biogenen Rohstoffe Pflanzenfasern mit oder ohne Reste von deren Pflanzen, tierische Fasern und/oder Pflanzenfaserregenerate sind.

3. Verfahren nach Anspruch 1 oder 2, **dadurch gekennzeichnet, daß** die biogenen Rohstoffe in Form von Vliesen, Matten, Gewebe, lose oder kompaktiert in verschiedenen Aufbereitungszuständen und/oder geschäumten biogenen Rohstoffen vorliegen.

4. Verfahren nach einem oder mehreren der Ansprüche von 1 bis 3, **dadurch gekennzeichnet, daß** die biogenen Rohstoffe oder die daraus bereits vorher hergestellten Formkörper unvollständig carbonisiert werden und diese durch Sintern in einen festen anorganischen, hauptsächlich aus Kohlenstoff bestehenden Formkörper überführt werden.

5. Verfahren nach Anspruch 4, **dadurch gekennzeichnet, daß** die biogenen Rohstoffe vor oder nach der unvollständigen Carbonisierung zerkleinert werden.

6. Verfahren nach Anspruch 4 oder 5, **dadurch gekennzeichnet, daß** die unvollständige Carbonisierung von Pflanzenfasern bis zu einem Kohlenstoffgehalt von 50 bis 80% und einem Sauerstoffgehalt von 42 bis 13% erfolgt.

7. Verfahren nach Anspruch 6, **dadurch gekennzeichnet, daß** die unvollständige Carbonisierung von Pflanzenfasern bis zu einem Kohlenstoffgehalt von 65 bis 75 % und einem Sauerstoffgehalt von 28 bis 18 % erfolgt.

8. Verfahren nach einem oder mehreren der Ansprüche 4 bis 7, **dadurch gekennzeichnet, daß** die aus der unvollständigen Carbonisierung stammenden Produkte wie Fasern, Pulver oder geschäumte Körper vor der weiteren Formgebung zerkleinert und gegebenenfalls granuliert werden.

9. Verfahren nach einem oder mehreren der Ansprüche von 4 bis 8, **dadurch gekennzeichnet, daß** die unvollständige Carbonisierung in einem Bereich niedriger, aber rohstoffabhängiger Temperaturen erfolgt, wobei für Pflanzenfasern die maximale Carbonisierungstemperatur 0 - 100 K unter oder 0 - 100 K über der Temperatur der maximalen Masseverlustrate liegt.

10. Verfahren nach Anspruch 9, **dadurch gekennzeichnet, daß** die maximale Carbonisierungstemperatur 0 - 40 K unter oder 0 - 40 K über der Temperatur der maximalen Masseverlustrate liegt.

11. Verfahren nach einem oder mehreren der Ansprüche von 4 bis 11, **dadurch gekennzeichnet, daß** die unvollständige Carbonisierung im Vakuum oder unter Schutzgas wie Argon oder Stickstoff und/oder unter kohlenstoffhaltiger Atmosphäre erfolgt und/oder die Ausgangsstoffe oder Formkörper in pulverisierten oder granulierten Kohlenstoffspezies eingebettet werden.

12. Verfahren nach einem oder mehreren der Ansprüche von 4 bis 11, **dadurch gekennzeichnet, daß** die unvollständige Carbonisierung zusätzlich unter mechanischem Druck von 0,1 - 200 MPa erfolgt.

13. Verfahren nach Anspruch 12, **dadurch gekennzeichnet, daß** die unvollständige Carbonisierung zusätzlich unter mechanischem Druck von 0,1 - 50 MPa erfolgt.

14. Verfahren nach Anspruch 12 oder 13, **dadurch gekennzeichnet, daß** die unvollständige Carbonisierung während eines Heißpreßprozesses erfolgt.

15. Verfahren nach einem oder mehreren der Ansprüche von 4 bis 14, **dadurch gekennzeichnet, daß** nach der unvollständigen Carbonisierung bzw. nach der Formgebung der Carbonisierungsprodukte eine oxydierende Behandlung bei 160 °C - 250 °C mit einem Sauerstoffpartialdruck von 0 - 2 MPa von 0 - 72 h oder eine Auslagerung an Luft angeschlossen wird.

16. Verfahren nach einem oder mehreren der Ansprüche von 4 bis 15, **dadurch gekennzeichnet, daß** zur Herstellung gesinterter Kohlenstofformkörper die biogenen Rohstoffe ohne Zusätze. oder nur mit Zusätzen biogenen Ursprungs mittels bekannter Verfahren der Kalt- und Warmformgebung zu Formkörpern verarbeitet werden und diese unvollständig carbonisiert werden, oder die biogenen Rohstoffe nach ihrer unvollständigen Carbonisierung und eventueller Zerkleinerung und Granulierung mittels bekannter Verfahren der Kalt- und Warmformgebung und mittels der bekannten Formgebungshilfsmittel zu vorverdichteten Formkörpern verarbeitet werden, deren Dichte nach Abzug der die Gründichte beeinflussenden Hilfsmittel 0,5 g/cm³ - 1,4 g/cm³ beträgt, und die vorverdichteten Formkörper nach teilweiser oder vollständiger Entfernung der Hilfsmittel gesintert werden, wobei die Wärmebehandlungsendtemperatur je nach angestrebtem Sinter- und Kristallinitätsgrad zwischen 300 °C und 2800 °C beträgt.

17. Verfahren nach Anspruch 16, **dadurch gekennzeichnet, daß** die Dichte der vorverdichteten Formkörper nach Abzug der die Gründichte beeinflussenden Hilfsmittel 0,8 g/cm³ bis 1,2g/cm³ beträgt.

18. Verfahren nach Anspruch 16 oder 17, **dadurch gekennzeichnet, daß** die angewandten Hilfsmittel ebenfalls biogene Rohstoffe sind.

19. Verfahren nach Anspruch 16 oder 17, **dadurch gekennzeichnet, daß** die angewandten Hilfsmittel biogene oder synthetische Rohstoffe mit der Fähigkeit zur Ausbildung geordneter bzw. teilgeordneter Kohlenstoffstrukturen wie beispielsweise Lignin sind.

20. Verfahren nach einem oder mehreren der Ansprüche 16 bis 17, **dadurch gekennzeichnet, daß** die Sinterung und Wärmebehandlung unter Schutzgas wie Argon oder Stickstoff, unter kohlenstoffhaltiger Atmosphäre wie Kohlenstoffmonoxid, Kohlendioxid, Methan, Propan usw. bei Atmosphären- oder erhöhtem Druck erfolgt, oder die vorverdichteten Formkörper in pulverisierten oder granulierten Kohlenstoffspezies (Koks, Ruß, biogenstämmiger Kohlenstoff) bzw. in kohlenstoffreisetzenden Mitteln eingebettet werden.

21. Verfahren nach einem oder mehreren der Ansprüche von 16 bis 19, **dadurch gekennzeichnet, daß** die Wärmebehandlung unter Vakuum bzw. bei partieller Anwesenheit kohlenstoffhaltiger Gase und/oder von Kohlenstoffspezies erfolgt.

22. Verfahren nach einem oder mehreren der Ansprüche von 4 bis 21, **dadurch gekennzeichnet, daß** zur Herstellung von Kohlenstoffbasis- oder Carbidbasis- Verbundwerkstoffen der unvollständig carbonisierte oder gesinterte oder darüber hinaus teilgrafitierte oder grafitierte (wärmebehandelte) Formkörper mit bekannten Tränkmetallen, wie Kupfer, Antimon, Magnesium, Silicium oder mit Polymeren wie Phenolharz, Epoxidharz oder Silikonharz infiltriert wird oder die Dichte durch wiederholtes Verkoken von infiltrierten Kohlenstoffsplezies wie Pech und Polymere bei Temperaturen von 300 °C bis 1000 °C erhöht wird.

23. Verfahren nach Anspruch 22, **dadurch gekennzeichnet, daß** anstelle der Infiltration vorstehende Stoffe den pulverigen oder fasrigen teilcarbonisierten Produkten zugemischt werden und erst danach kompaktiert und gesintert werden.

24. Verfahren nach Anspruch 22 oder 23, **dadurch gekennzeichnet, daß** zur Herstellung von Siliciumcarbidbasis-Verbundwerkstoffen der unvollständig carbonisierte oder gesinterte oder darüber hinaus teilgrafitierte oder grafitierte Körper mit flüssigem Silicium bei Temperaturen bis maximal 1800 °C zur Voll- oder Teilumwandlung in Siliciumcarbid infiltriert wird.

25. Verfahren nach Anspruch 24, **dadurch gekennzeichnet, daß** die vorverdichteten oder bereits wärmebehandelten Formkörper vor der Infiltration mit flüssigem Silicium mit siliciumorganischen Verbindungen getränkt werden und sich eine Aushärtung und thermische Zersetzung der siliciumorganischen Verbindung anschließen, die aber Bestandteil des Gesamtprozesses sein können, oder ihre Einbringung über die Gasphase erfolgt.

26. Verfahren nach Anspruch 24 oder 25, **dadurch gekennzeichnet, daß** den pulvrigen oder fasrigen teilcarbonisierten Produkten siliciumorganische Verbindungen zugemischt werden oder damit bzw. mit Kohlenstoff über die Gasphase beschichtet werden.

27. Verfahren nach einem oder mehreren der Ansprüche von 4 bis 26, **dadurch gekennzeichnet, daß** den biogenen Fasern oder ihren Pyrolysaten carbidbildende und/oder nitridbildende Elemente, wie Wolfram, Titan oder andere, zugemischt werden.

28. Verfahren nach einem oder mehreren der Ansprüche von 1 bis 27, **dadurch gekennzeichnet, daß** die feinen, schlauchartigen Porenkanäle der nach diesen Ansprüchen hergestellten Werkstoffe, die aus dem pflanzlichen Lumen resultieren, zwecks Speicherung, Zwischenspeicherung und Transport mit Gasen und/oder Flüssigkeiten gefüllt werden.

## Claims

1. Process for producing carbon composites, carbon-containing materials, carbidic and/or carbonitridic materials, **characterized in that** the raw materials used for producing these materials are wholly or partly, i.e. to an extent of 100-10%, biogenic, i.e. materials comprising natural fibrous or animal materials, which are converted into a mainly carbon-containing product by incomplete carbonization, are processed to produce shaped bodies either beforehand, simultaneously or afterwards and are sintered to form porous or dense shaped bodies either simultaneously or afterwards.

2. Process according to Claim 1, **characterized in that** the biogenic raw materials are plant fibres with or without residues of their plants, animal fibres and/or reconstituted plant fibres.

3. Process according to Claim 1 or 2, **characterized in that** the biogenic raw materials are in the form of nonwovens, mats, woven fabrics, loose or compacted in various processed states and/or foamed biogenic raw materials.

4. Process according to one or more of Claims 1 to 3, **characterized in that** the biogenic raw materials or the shaped bodies produced from them beforehand are incompletely carbonized and are then converted by sintering into a solid inorganic shaped body consisting mainly of carbon.

5. Process according to Claim 4, **characterized in that** the biogenic raw materials are comminuted before or after the incomplete carbonization.

6. Process according to Claim 4 or 5, **characterized in that** the incomplete carbonization of plant fibres is carried out to a carbon content of from 50 to 80% and an oxygen content of from 42 to 13%.

7. Process according to Claim 6, **characterized in that** the incomplete carbonization of plant fibres is carried out to a carbon content of from 65 to 75% and an oxygen content of from 28 to 18%.

8. Process according to one or more of Claims 4 to 7, **characterized in that** the products produced in the incomplete carbonization, e.g. fibres, powders or foamed bodies, are comminuted and, if appropriate, granulated before further shaping.

9. Process according to one or more of Claims 4 to 8, **characterized in that** the incomplete carbonization is carried out in a range of low but raw material-dependent temperatures, with the maximum carbonization temperature for plant fibres being 0-100 K below or 0-100 K above the temperature at which the maximum loss in mass occurs.

10. Process according to Claim 9, **characterized in that** the maximum carbonization temperature is 0-40 K below or 0-40 K above the temperature at which the maximum loss in mass occurs.

11. Process according to one or more of Claims 4 to 11, **characterized in that** the incomplete carbonization is carried out under reduced pressure or under protective gas such as argon or nitrogen and/or under a carbon-containing atmosphere, and/or the starting materials or shaped bodies are embedded in pulverized or granulated carbon species.

12. Process according to one or more of Claims 4 to 11, **characterized in that** the incomplete carbonization additionally occurs under a mechanical pressure of 0.1-200 MPa.

13. Process according to Claim 12, **characterized in that** the incomplete carbonization additionally occurs under a mechanical pressure of 0.1-50 MPa.

14. Process according to Claim 12 or 13, **characterized in that** the incomplete carbonization occurs during a hot pressing process.

15. Process according to one or more of Claims 4 to 14, **characterized in that** the incomplete carbonization or the shaping of the carbonization products is followed by an oxidative treatment at 160°C-250°C under an oxygen partial pressure of 0-2 MPa for 0-72 hours or by exposure to air.

16. Process according to one or more of Claims 4 to 15, **characterized in that**, to produce sintered shaped carbon bodies, the biogenic raw materials are processed without additives or only with additives of biological origin by means of known methods of cold and hot forming to produce shaped bodies and these are incompletely carbonized, or the biogenic raw materials are firstly incompletely carbonized and possibly comminuted and granulated by means of known methods of cold and hot forming and are then processed with the aid of known shaping auxiliaries to produce predensified shaped bodies whose density after subtraction of the auxiliaries which influence the green density is 0.5 g/cm³-1.4 g/cm³ and the predensified shaped bodies are subjected to partial or complete removal of the auxiliaries and then sintered, with the end temperature of the heat treatment being in the range from 300°C to 2800°C, depending on the desired degree of sintering and crystallinity.

17. Process according to Claim 16, **characterized in that** the density of the predensified shaped bodies after subtraction of the auxiliaries which influence the green density is from 0.8 g/cm³ to 1.2 g/cm³.

18. Process according to Claim 16 or 17, **characterized in that** the auxiliaries employed are likewise biogenic raw materials.

19. Process according to Claim 16 or 17, **characterized in that** the auxiliaries employed are biogenic or synthetic raw materials which are capable of forming ordered or partially ordered carbon structures, for example lignin.

20. Process according to one or more of Claims 16 to 17, **characterized in that** the sintering and heat treatment are carried out under protective gas such as argon or nitrogen, under a carbon-containing atmosphere such as carbon monoxide, carbon dioxide, methane, propane, etc., at atmospheric or superatmospheric pressure, or the predensified shaped bodies are embedded in pulverized or granulated carbon species (coke, carbon black, biogenic carbon) or in media which release carbon.

21. Process according to one or more of Claims 16 to 19, **characterized in that** the heat treatment is carried out under reduced pressure or in the partial presence of carbon-containing gas and/or of carbon species.

22. Process according to one or more of Claims 4 to 21, **characterized in that**, to produce carbon-based or carbide-based composites, the incompletely carbonized or sintered or additionally partially graphitized or graphitized (heat-treated) shaped body is infiltrated with known impregnation metals such as copper, antimony, magnesium or silicon or with polymers such as phenolic resin, epoxy resin or silicone resin or the density is increased by repeated carbonization of infiltrated carbon species such as pitch and polymers at temperatures of from 300°C to 1000°C.

23. Process according to Claim 22, **characterized in that**, in place of the infiltration, the pulverulent or fibrous partially carbonized products are admixed with materials of the type mentioned above and are only then compacted and sintered.

24. Process according to Claim 22 or 23, **characterized in that**, to produce composites based on silicon carbide, the incompletely carbonized or sintered or additionally partially graphitized or graphitized body is infiltrated with liquid silicon at temperatures of up to 1800°C to achieve complete or partial conversion into silicon carbide.

25. Process according to Claim 24, **characterized in that** the predensified or previously heat-treated shaped bodies are impregnated with organosilicon compounds prior to the infiltration with liquid silicon and the organosilicon compound is then cured and thermally decomposed, which can also be part of the overall process, or the compounds are introduced via the gas phase.

26. Process according to Claim 24 or 25, **characterized in that** the pulverulent or fibrous partially carbonized products are admixed with organosilicon compounds or are coated therewith or with carbon via the gas phase.

27. Process according to one or more of Claims 4 to 26, **characterized in that** the biogenic fibres or their pyrolysates are admixed with carbide-forming and/or nitride-forming elements such as tungsten, titanium or others.

28. Process according to one or more of Claims 1 to 27, **characterized in that** the fine, tube-like pore channels of the materials produced according to these claims, which channels result from the plant lumen, are filled with gas and/or liquids for the purposes of storage, temporary storage and transport.

## Revendications

1. Procédé de fabrication de matériaux composites à base de carbone, de matériaux contenant du carbone, de matériaux à base de carbure et/ou de carbonitrure,
**caractérisé en ce que**
les matières premières utilisées pour la fabrication sont entièrement ou partiellement, c'est-à-dire à 100-10 %, biogènes, c'est-à-dire des matériaux constitués de corps fibreux naturels ou de matériaux d'origine animale, qui sont transformés par carbonisation incomplète en un produit principalement carboné,
elles sont transformées auparavant, simultanément ou ensuite en articles moulés, et simultanément ou ultérieurement sont frittées pour fournir des articles moulés poreux ou denses.

2. Procédé selon la revendication 1,
**caractérisé en ce que**
les matières premières biogènes sont des fibres végétales avec ou sans restes de plantes, de fibres animales et/ou de produits de régénération de fibres végétales.

3. Procédé selon la revendication 1 ou 2,
**caractérisé en ce que**
les matières premières biogènes se présentent sous forme de voiles, de mats, de tissus, sous forme lâche ou compactée dans divers états de préparation et/ou sous forme de matières premières biogènes en mousse.

4. Procédé selon une ou plusieurs des revendications 1 à 3,
**caractérisé en ce que**
les matières premières biogènes ou les articles moulés qui en ont déjà été fabriqués sont incomplètement carbonisés, et sont transformées par frittage en un article moulé inorganique solide principalement constitué de carbone.

5. Procédé selon la revendication 4,
**caractérisé en ce que**
les substances actives biogènes sont pulvérisées avant ou après la carbonisation incomplète.

6. Procédé selon la revendication 4 ou 5,
**caractérisé en ce que**
la carbonisation incomplète des fibres végétales s'effectue jusqu'à une teneur en carbone allant de 50 à 80 % et une teneur en oxygène allant de 42 à 13 %.

7. Procédé selon la revendication 6,
**caractérisé en ce que**
la carbonisation incomplète des fibres végétales s'effectue jusqu'à une teneur en carbone de 65 à 75 % et une teneur en oxygène de 28 à 18 %.

8. Procédé selon une ou plusieurs des revendications 4 à 7,
**caractérisé en ce que**
les produits qui proviennent de la carbonisation incomplète telle que les fibres, les poudres ou les corps en mousse sont pulvérisés et le cas échéant granulés avant la poursuite de la mise en forme.

9. Procédé selon une ou plusieurs des revendications 4 à 8,
**caractérisé en ce que**
la carbonisation incomplète s'effectue dans un intervalle de températures basses, mais dépendant des matières premières, la température de carbonisation maximale pour les fibres végétales se situant à 0 - 100 K en dessous ou à 0 - 100 K au-dessus de la température du taux maximum de perte massique.

10. Procédé selon la revendication 9,
**caractérisé en ce que**
la température maximale de carbonisation se situe à 0 - 40 K en dessous ou à 0 - 40 K au-dessus de la température du taux maximum de perte massique.

11. Procédé selon une ou plusieurs des revendications 4 à 11,
**caractérisé en ce que**
la carbonisation incomplète s'effectue sous vide ou sous un gaz protecteur tel que l'argon ou l'azote et/ou sous une atmosphère contenant du carbone, et/ou
les produits de départ ou les articles moulés sont enrobés dans une espèce carbonée pulvérisée ou granulée.

12. Procédé selon une ou plusieurs des revendications 4 à 11,
**caractérisé en ce que**
la carbonisation incomplète s'effectue en outre sous une pression mécanique de 0,1 à 200 MPa.

13. Procédé selon la revendication 12,
**caractérisé en ce que**
la carbonisation incomplète s'effectue en outre sous une pression mécanique de 0,1 à 50 MPa.

14. Procédé selon la revendication 12 ou 13,
**caractérisé en ce que**
la carbonisation incomplète s'effectue au cours d'un procédé de pressage à chaud.

15. Procédé selon une ou plusieurs des revendications 4 à 14,
**caractérisé en ce qu'**
après la carbonisation incomplète ou selon les cas après la mise en forme des produits de carbonisation, on adjoint un traitement oxydant entre 160°C et 250°C avec une pression partielle d'oxygène de 0 à 2 MPa pendant 0 à 72 heures ou un durcissement à l'air.

16. Procédé selon une ou plusieurs des revendications 4 à 15,
**caractérisé en ce que**
pour produire des articles moulés au carbone frittés, on transforme les matières premières biogènes, sans additifs, ou uniquement avec des additifs d'origine biogène, au moyen de procédés connus de mise en forme à froid ou à chaud pour donner des articles moulés, puis on carbonise incomplètement ceux-ci, ou bien
on transforme les matières premières biogènes, après leur carbonisation incomplète et le cas échéant leur pulvérisation et leur granulation, au moyen de procédés connus de mise en forme à froid et à chaud, et au moyen des adjuvants de mise en forme connus, pour donner des articles moulés précompactés dont la densité, après retrait des adjuvants influant sur la densité à l'état d'ébauche, s'élève à 0,5 g/cm³ - 1,4 g/cm³, et
on fritte les articles moulés précompactés après avoir retiré partiellement ou entièrement les adjuvants, la température finale du traitement thermique étant comprise entre 300°C et 2800°C selon le degré de frittage et de cristallinité recherché.

17. Procédé selon la revendication 16,
**caractérisé en ce que**
la densité des articles moulés précompactés après retrait des adjuvants influant sur la densité à l'état d'ébauche s'élève à 0,8 g/cm³ à 1,2 g/cm³.

18. Procédé selon la revendication 16 ou 17,
**caractérisé en ce que**
les adjuvants appliqués sont également des matières premières biogènes.

19. Procédé selon la revendication 16 ou 17,
**caractérisé en ce que**
les adjuvants appliqués sont des matières premières biogènes ou synthétiques présentant une aptitude à forme des structures carbonées ordonnées ou selon les cas partiellement ordonnées comme par exemple la lignine.

20. Procédé selon une ou plusieurs des revendications 16 à 17,
**caractérisé en ce que**
le frittage et le traitement thermique sont conduits sous un gaz protecteur tel que l'argon ou l'azote, sous une atmosphère contenant du carbone comme le monoxyde de carbone, l'anhydride carbonique, le propane, etc., à une pression égale ou supérieure à la pression atmosphérique, ou **en ce qu'**on enrobe les articles moulés précompactés dans une espèce carbonée pulvérisée ou granulée (coke, noir de fumée, carbone d'origine biogène) ou selon les cas dans des agents libérant du carbone.

21. Procédé selon une ou plusieurs des revendications 16 à 19,
**caractérisé en ce qu'**
on conduit le traitement thermique sous vide ou selon les cas avec présence partielle de gaz contenant du carbone et/ou d'espèces carbonées.

22. Procédé selon une ou plusieurs des revendications 4 à 21,
**caractérisé en ce que**
pour la production de matériaux composites à base de carbone ou de carbure, on infiltre l'article moulé incomplètement carbonisé ou fritté, ou en outre partiellement graphité ou graphité (traité à la chaleur) avec des métaux d'imbibition connus comme le cuivre, l'antimoine, le magnésium, le silicium, ou avec des polymères comme une résine phénolique, une résine époxyde ou une résine de silicone, ou
on accroît la densité par cokéfaction répétée d'espèces carbonées infiltrées comme la poix et des polymères à des températures allant de 300°C à 1000°C.

23. Procédé selon la revendication 22,
**caractérisé en ce qu'**
au lieu de l'infiltration on ajoute, en mélangeant, des corps présents aux produits partiellement carbonisés pulvérulents ou fibreux, puis ensuite seulement on compacte et on fritte.

24. Procédé selon la revendication 22 ou 23,
**caractérisé en ce que**
pour la production de matériaux composites à base de carbure de silicium, on infiltre dans le corps incomplètement carbonisé ou fritté ou en outre partiellement graphité ou graphité, du silicium liquide à des températures allant jusqu'à 1800°C au maximum afin de le transformer entièrement ou partiellement en carbure de silicium.

25. Procédé selon la revendication 24,
**caractérisé en ce qu'**
on imbibe les articles moulés préalablement compactés ou déjà traités à la chaleur, avant d'y infiltrer du silicium liquide, avec des composés d'organosilicium, et
on procède ensuite à un durcissement et à une décomposition thermique du composé d'organosilicium, ces traitements pouvant cependant être compris dans le processus global, ou bien
on procède à ces apports par la phase gazeuse.

26. Procédé selon la revendication 24 ou 25,
**caractérisé en ce qu'**
on ajoute, en mélangeant, aux produits partiellement carbonisés pulvérulents ou fibreux, des composés d'organo-silicium ou
on les recouvre avec eux ou selon les cas avec du carbone en passant par la phase gazeuse.

27. Procédé selon une ou plusieurs des revendications 4 à 26,
**caractérisé en ce qu'**
on mélange aux fibres biogènes, ou à leurs produits de pyrolyse, des éléments formant des carbures et/ou formant des nitrures, comme le tungstène, le titanc, ou d'autres,

28. Procédé selon une ou plusieurs des revendications 1 à 27,
**caractérisé en ce qu'**
on remplit avec des gaz et/ou des liquides les fins canaux de pores cn forme de tubes des matériaux produits selon les présentes revendications, qui proviennent de la lumière végétale, aux fins d'emmagasinage, d'emmagasinage intermédiaire et de transport.
